# EUROPÄISCHE PATENTSCHRIFT

(11) **EP 1 517 389 B1**
(45) Veröffentlichungstag und Bekanntmachung des Hinweises auf die Patenterteilung: **02.08.2006**
(21) Anmeldenummer: 03020855.7
(22) Anmeldetag: 15.09.2003
(51) Int. Cl.: H01M 8/06, C01B 3/38, B01J 8/02

(54) **Reformierungsmodul für Brennstoffzellenanlagen zur Umsetzung von Kohlenwasserstoffhaltigen Brenngasen in Wasserstoffhaltige Prozessgase**
Reformer unit for fuel cells for reforming hydrocarbon feed gases into hydrogen-containing fuel gases
Unité de reformage pour batterie de piles à combustible transformant un gaz de hydrocarbure d'alimentation en un gaz combustible contenant de l'hydrogène

(43) Veröffentlichungstag der Anmeldung: 23.03.2005
(73) Patentinhaber: Balcke-Dürr GmbH, 46049 Oberhausen (DE)
(72) Erfinder: Podhorsky, Miroslav, Dr., 40882 Ratingen (DE); Brenner, Albrecht, Dr., 49733 Haren (DE)
(74) Vertreter: Lang, Friedrich

(56) Entgegenhaltungen:
- EP-A- 0 429 958
- EP-A- 1 231 659
- US-A- 5 670 269
- PATENT ABSTRACTS OF JAPAN Bd. 2000, Nr. 21, 3. August 2001 (2001-08-03) & JP 2001 089105 A (MITSUBISHI ELECTRIC CORP), 3. April 2001 (2001-04-03)

## Beschreibung

Die Erfindung betrifft ein Reformierungsmodul zur Umsetzung von kohlenwasserstoffhaltigen Brenngasen in wasserstoffhaltige Prozeßgase mit einem Rohrwärmetauscher, den kohlenwasserstoffhaltiges Brenngas durchströmt, wobei dieses unter Nutzung des Wärmegehalts des reformierten Prozeßgases vorgewärmt wird bevor es in einen Katalysatorraum eintritt, in dem die katalytische Umsetzung an der Oberfläche eines Plattenkatalysators stattfindet, und die den Katalysator tragenden Platten in Form von Wärmetauschern ausgeführt sind, die durchströmt werden vom Kathodenabgas und dem Abgas eines katalytischen Verbrennungsraums, in welchem die im Prozeßgas vorhandenen Reste Wasserstoff, Kohlendioxid und Kohlenmonoxid nach dem elektrochemischen Prozeß katalytisch verbrannt werden.

Brennstoffzellen moderner Bauform bieten sich aufgrund ihrer kompakten Ausgestaltung in hervorragender Weise zur zentralen oder dezentralen Energieversorgung an. Üblicherweise werden modeme Brennstoffzellen wie zum Beispiel Brennstoffzellen des Schmelzkarbonattyps (MCFC) oder Festoxidbrennstoffzellen (SOFC) mit Wasserstoff betrieben. Gerade der Einsatz solcher Brennstoffzellen in mobilen Einheiten ist mit dem Problem der Wasserstoffversorgung behaftet. Bekannterweise stellt der Transport von Wasserstoff ein sicherheits- und lagertechnisches Problem dar. Sowohl Wasserstoff im Druckgastanks als auch tiefkalt in entsprechenden Isoliertanks mitgeführt birgt ein sehr großes Gefahrenpotenzial. Darüber hinaus sind die transportierbaren Volumina in der Regel sehr gering, was zum Beispiel beim Einsatz einer Brennstoffzelle in der Automobiltechnik zu sehr begrenzten Reichweiten führt.

Eine bessere Möglichkeit zur Versorgung der Brennstoffzelle mit wasserstoffhaltigem Prozeßgas bietet daher die Reformierung von kohlenwasserstoffhaltigen Verbindungen in wasserstoffhaltiges Prozeßgas.

Eine solche Reformierung kann auf unterschiedliche Art und Weise geschehen. Zum einen können die wasserstoffhaltigen Verbindungen in externen Reformierungsreaktoren in wasserstoffhaltige Prozeßgase umgesetzt werden. Dies bietet jedoch den Nachteil, daß die für diesen endothermen Prozeß notwendige große Energiemenge zur Verfügung gestellt werden muß und sich die Gesamtenergiebilanz der Brennstoffzelleneinheit deutlich verschlechtert.

Bei der Entwicklung von Brennstoffzellen ist seit vielen Jahren bekannt, daß die Wärme, die bei der elektrochemischen Reaktion innerhalb der Brennstoffzelle gewonnen wird, ausreicht um die endotherme Reformierung von Kohlenwasserstoff in wasserstoffhaltiges Prozeßgas aufrechterhalten zu können. Diese Erkenntnis führte zu zahlreichen Konzepten für die interne Reformierung von Kohlenwasserstoffen, die bei der SOFC und der MCFC - begünstigt durch ihre hohe Arbeitstemperaturen - Anwendung finden. Bei den Konzepten zur internen Reformierung wird prinzipiell zwischen zwei Varianten unterschieden, der direkten internen Reformierung (DIR) und der indirekten internen Reformierung (IIR), die auch als integrierte Reformierung bezeichnet wird.

Die indirekte interne Reformierung (IIR) beinhaltet das Umsetzen von hohen Kohlenwasserstoffen an einem Reformierungskatalysator, der in engem thermischen Kontakt mit dem Brennstoffzellenstack steht, von diesem aber räumlich getrennt ist. Konstruktiv realisiert werden kann die IIR zum einen durch einen Plattenreformer in Kontakt mit den Zellen eines Brennstoffzellenstacks. Das Reformat aus jeder Platte wird dann in den Stack geleitet. Zum anderen kann der Reformierungskatalysator in der Gasverteilung jeder einzelnen Zelle eines Stacks aufgebracht werden. Dabei wirkt sich der enge thermische Kontakt zwischen Reformer und Brennstoffzellenstack positiv aus. Nachteilig ist häufig, daß die Reaktionswärme aus der elektrochemischen Brennstoffzellenreaktion nur in ausreichenden Mengen von den Zellen abgegeben werden kann, die in unmittelbarer Nachbarschaft zum Reformer liegen.

Bei der direkten internen Reformierung (DIR) findet die Reformierungsreaktion innerhalb der Anode der Brennstoffzelle statt. Im Fall der MCFC wird dies verwirklicht, indem Reformierungskatalysator in den Kanälen der Brennstoffzelle aufgebracht wird. Bei der SOFC ist die Betriebstemperatur so hoch, daß die Reformierung der kohlenwasserstoffhaltigen Verbindung direkt an der Anode der Brennstoffzelle durchgeführt werden kann, die dafür außerdem einen ausreichend hohen Nickel-Anteil aufweist. Vorteil der DIR gegenüber der IIR oder der externen Reformierung liegen in der guten und direkten Wärmeübertragung zwischen Brennstoffzellenstack und Reformierungszone und dem hohen chemischen Integrationsgrad begründet. Wasserdampf als Produkt der elektrochemischen Reaktion in der Zelle kann als Ausgangsprodukt der Reformierungsreaktion direkt eingekoppelt werden, so daß weniger Dampf für die Reformierung verglichen mit der IIR erzeugt werden muß, wodurch der elektrische Wirkungsgrad der Brennstoffzelle verbessert werden kann. Die Wärmemenge, die durch die elektrochemische Reaktion in der Brennstoffzelle erzeugt wird, ist ungefähr doppelt so groß wie der Wärmebedarf der Reformierungsreaktion. Durch die gute Wärmeübertragung zwischen Reformierung und Zelle bei der DIR wird das Kühlen der Brennstoffzelle, das konventionell dadurch realisiert wird, daß ein großer Gasstrom durch die Zelle geleitet wird, stark vereinfacht. Auch diese Maßnahmen verbessern den elektrischen Wirkungsgrad des gesamten Systems im Vergleich zur IIR. Weitere Vorteile der DIR gegenüber der IIR und besonders der externen Reformierung sind: Verringerte Systemkosten, da ein eigener separater Reformierungsapparat entfällt; eine gleichmäßige Wasserstoffbildung, woraus eine einheitlichere Temperaturverteilung resultiert und ein höherer Kohlenwasserstoffumsatz.

Die interne Reformierung weist jedoch auch große Nachteile auf. So muß z. B. die Hardware des Brennstoffzellenstacks so modifiziert werden, daß der Reformierungskatalysator eingebracht werden kann. Der Reformierungskatalysator kann durch Verunreinigung im Brennstoff oder durch Sinterungsprozesse desaktivieren, was bis zum Ausfall des kompletten Brennstoffzellenstacks führen kann. Die Integration von zwei Funktionen - der elektrochemischen Reaktion und der Reformierung - kann die Flexibilität beim Betrieb der Brennstoffzelle verringern. Die vollständige interne Reformierung kann zu Kohlenstoffablagerungen in der Anodenkammer führen, die den Reformierungskatalysator desaktivieren. Des weiteren bilden sich bei der vollständigen internen Reformierung wegen des stark kühlenden Effekts der Reformierung aufgrund ihrer sehr schnellen Reaktionsgeschwindigkeit große Temperaturgradienten im Bereich des Brennstoffeinlasses aus. Dies führt zu einer starken thermischen Belastung der Werkstoffe der Brennstoffzelle. Vor allem das Anfahren von Brennstoffzellen mit integrierter Reformierung erweist sich oftmals problematisch, da die für die Reformierung notwendige Energie dem kompletten Brennstoffzellenstack extern zugeführt werden muß.

Aus der JP 2001089105 sind plattenförmige Reformierungseinheiten bekannt, welche als Module leicht austauschbar sind und durch vorbeiströmende Verbrennungsabgase beheizt werden. Aus der US 5,670,269 ist ein Brennstoffzellenmodul bekannt, in welchem plattenförmige Reformereinheiten abwechselnd mit katalytischen Verbrennungskammern in Stapeln angeordnet sind. Die Wände der Reformerkammern in Form von Wärmetauschern und eine geschickte Strömungsführung sorgen für eine gute Temperaturverteilung in den Reformerkammern. Zusätzlich wird das Brenngas vor Eintritt in die Reformerkammer durch eine weitere Wärmetauschereinheit erwärmt.

Die Aufgabe der Erfindung ist es unter Vermeidung der oben aufgeführten Nachteile eine Reformereinheit zur Reformierung von kohlenwasserstoffhaltigem Brenngas in wasserstoffhaltiges Prozeßgas zur Verfügung zu stellen, welche die Vorteile im Hinblick auf Flexibilität und Modularität der externen Reformierung mit den Vorteilen des innigen thermischen Kontakts, wie er bei der internen Reformierung auftritt, zu vereinigen. Zusätzlich soll die Temperierung der Reformierungseinheit für eine optimale Prozeßführung ausgelegt sein.

Erfindungsgemäß wird die Aufgabe dadurch gelöst, dass ein Reformierungsmodul zur Umsetzung von kohlenwasserstoffhaltigen Brenngasen in wasserstoffhaltige Prozessgase mit einem Rohrwärmetauscher ausgestattet ist, den kohlenwasserstoffhaltiges Brenngas durchströmt, wobei dieses unter Nutzung des Wärmegehalts des reformierten Prozessgases vorgewärmt wird bevor es in einen Katalysatorraum eintritt. In dem Katalysatorraum findet die katalytische Umsetzung an der Oberfläche eines Plattenkatalysators statt, wobei die den Katalysator tragenden Platten in Form von Wärmetauschern ausgeführt sind, die durchströmt werden vom Kathodenabgas und dem Abgas eines katalytischen Verbrennungsraums, in welchem die im Prozeßgas vorhandenen Reste Wasserstoff, Kohlendioxid und Kohlenmonoxid nach dem elektrochemischen Prozeß katalytisch verbrannt werden. Erfindungsgemäß verfügt das Reformermodul über einen Bypaßeinlass zum vorgeschalteten Rohrwärmetauscher, durch welchen kaltes, kohlenwasserstoffhaltiges Brenngas in den Katalysatorraum geleitet werden kann. Dies bietet den Vorteil der optimalen Prozeßführung des katalytischen Reformierungsprozeßes ohne Einflussnahme auf den Gesamtvolumenstrom.

Vorteilhafterweise werden die Abgase der Brennstoffzelle sowie die Abgase des katalytischen Verbrennungsraums unter Zuhilfenahme eines Ventilators durch die in Form eines Plattenwärmetauschers aufgebauten Katalysatorträger gefördert, um eine optimale Ausnutzung der in den Abgasen enthaltenen Energie zu gewährleisten.

Um auch die Strahlungswärme des elektrochemischen Prozesses in der Brennstoffzelle optimal zu nutzen schließt das Reformermodul in vorteilhafterweise großflächig an die Brennstoffzelle an.

Um eine möglichst große Flexibilität und Redundanz zu gewährleisten sind sowohl die Rohrwärmetauschereinheit zur Vorwärmung des kohlenwasserstoffhaltigen Brenngases als auch die in Form eines Plattenwärmetauschers ausgebildeten Katalysatorträger modular aufgebaut und können einzeln gewechselt werden.

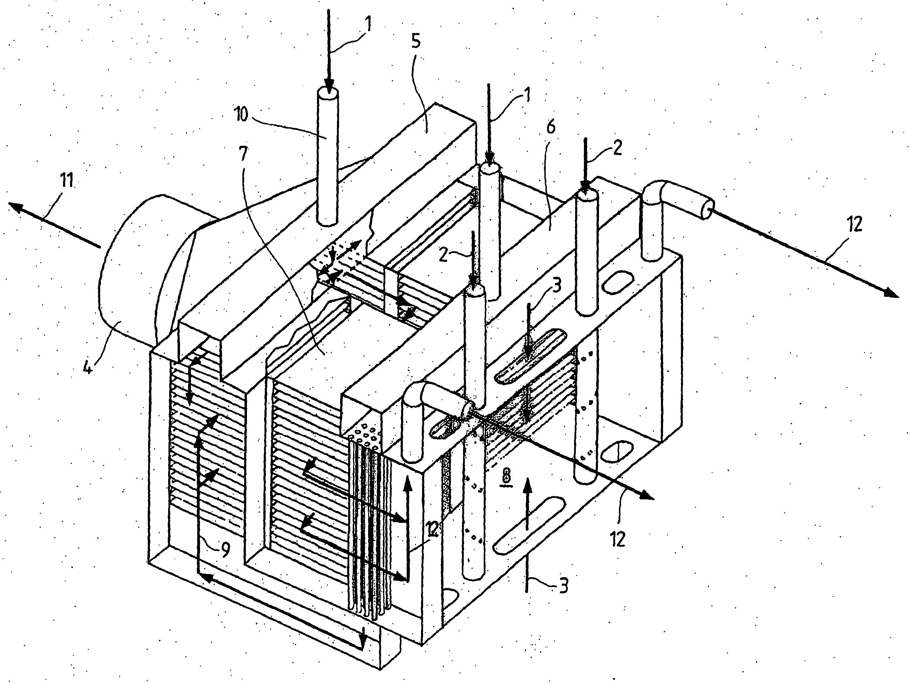

Fig. 1 zeigt eine vorteilhafte Ausführung eines erfindungsgemäßen Reformermoduls, hat jedoch keinen beschränkenden Charakter.

Kohlenwasserstoffhaltiges Brenngas (1) tritt in das Rohrwärmetauschermodul (6) ein und strömt wie mit Gasstrom (9) versinnbildlicht in ein Plattenkatalysatormodul (7). Im Rohrwärmetauschermodul (6) wird die im wasserstoffhaltigen Prozeßgas (12) nach der Reformierung enthaltene Wärmeenergie zur Vorwärmung des kohlenwasserstoffhaltigen Brenngases (1) genutzt. Im Plattenkatalysatormodul (7) wird es unter Ausnutzung der durch die katalytische Verbrennung der Anoden- (2) und Kathodengase (3) im katalytischen Verbrennungsraum (8) entstehenden Abwärme in ein wasserstoffhaltiges Prozeßgas (12) reformiert. Zur optimalen Ausnutzung der in katalytischen Verbrennungsraum (8) gewonnenen Energie werden die Abgase aus diesem mittels eines Ventilators (4) angesogen und durch die Plattenkatalysatormodule (7) geführt. Anschließend strömen sie als Abgas (11) ab. Zur optimalen Temperatursteuerung innerhalb des Reformermoduls verfügt dieses über einen Bypaßeinlaß für kaltes kohlenwasserstoffhaltiges Brenngas (10) und eine entsprechende Gasverteilung (5).

### Bezugszeichenliste

- 1: kohlenwasserstoffhaltiges Brenngas
- 2: Anodenabgas
- 3: Kathodenabgas
- 4: Ventilator
- 5: Gasverteilung Bypaß
- 6: Rohrwärmetauschermodul
- 7: Plattenkatalysatormodul
- 8: katalytischer Verbrennungsraum
- 9: Brenngasstrom nach Rohrwärmetauscher
- 10: Bypaßeinlaß für kaltes kohlenwasserstoffhaltiges Brenngas
- 11: Abgasstrom nach Ventilator
- 12: wasserstoffhaltiges Prozeßgas zur Brennstoffzelle

## Patentansprüche

1. Reformierungsmodul zur Umsetzung von kohlenwasserstoffhaltigen Brenngasen in wasserstoffhaltige Prozessgase mit einem Rohrwärmetauscher (6), den kohlenwasserstoffhaltiges Brenngas (1) durchströmt, wobei dieses unter Nutzung des Wärmegehalts des reformierten Prozessgases vorgewärmt wird bevor es in einen Katalysatorraum (7) eintritt, in dem die katalytische Umsetzung an der Oberfläche eines Platten katalysators stattfindet, und die den Katalysator tragenden Platten in Form von Wärmetauschern ausgeführt sind, die durchströmt werden vom Kathodenabgas (3) und dem Abgas eines katalytischen Verbrennungsraums (8), in welchem die im Prozessgas vorhandenen Reste Wasserstoff, Kohlendioxid und Kohlenmonoxid nach dem elektrochemischen Prozess katalytisch verbrannt werden,
**dadurch gekennzeichnet,**
**dass** das Reformermodul über einen Bypasseinlass (10) zum vorgeschalteten Rohrwärmetauscher verfügt, durch welchen kaltes, kohlenwasserstoffhaltiges Brenngas in den Katalysatorraum geleitet werden kann.

2. Reformermodul gemäß Anspruch 1,
**dadurch gekennzeichnet,**
**dass** die Brennstoffzellenabgase sowie die Abgase des katalytischen Verbrennungsraums (8) unter Zuhilfenahme eines die Abgase ansaugenden Ventilators (4) durch die in Form eines Plattenwärmetauschers aufgebauten Katalysatorträger (7) gefördert wird.

3. Reformermodul nach einem oder mehreren der Ansprüche 1 und 2,
**dadurch gekennzeichnet,**
**dass** das Reformermodul zur Nutzung der Abwärme des elektrochemischen Prozesses großflächig an die Brennstoffzelle anschließt.

4. Reformierungsmodul nach einem oder mehreren der Ansprüche 1 bis 3,
**dadurch gekennzeichnet,**
**dass** sich der Rohrwärmetauscher (6) als Modul austauschen lässt.

5. Reformermodul nach einem oder mehreren der Ansprüche 1 bis 4,
**dadurch gekennzeichnet,**
**dass** sich die in Form eines plattenförmigen Wärmetauschers aufgebauten Plattenkatalysatoren (7) modular austauschen lassen.

## Claims

1. Reforming module for converting hydrocarbon-containing combustible gases to hydrogencontaining process gases with a tubular heat exchanger (6) through which hydrocarbon-containing fuel gas (1) flows, the fuel gas being preheated through utilization of the heat content of the reformed process gas before entering a catalyst chamber (7) wherein the catalytic conversion occurs on the surface of a plate catalyst, and the catalyst-bearing plates being designed in the form of heat exchangers, through which flow the cathode waste gas (3) and the waste gas from a catalytic combustion chamber (8), in which the residual amounts of hydrogen, carbon dioxide, and carbon monoxide, present in the process gas, are combusted catalytically after the electrochemical process, **characterized in that**
the reformer module has a bypass inlet (10) to an upstream tubular heat exchanger through which cold hydrocarbon-containing fuel gas can be passed into the catalyst compartment.

2. Reformer module according to claim 1, **characterized in that** the fuel cell waste gases and the waste gases from the catalytic combustion chamber (8) are transported with aid of a fan (4), drawing off the waste gases, through a catalyst carrier (7) constructed in the form of a plate heat exchanger.

3. Reformer module according to one or several of claims 1 and 2, **characterized in that** the reformer module to utilize the waste heat of the electrochemical process is connected by a large area to the fuel cell.

4. Reforming module according to one or several of claims 1 to 3, **characterized in that** the tubular heat exchanger (6) can be replaced as a module.

5. Reformer module according to one or several of claims 1 to 4, **characterized in that** the plate condensers (7), constructed in the form of a plate-shaped heat exchanger, can be replaced modularly.

## Revendications

1. Module de reformage pour convertir des gaz combustibles contenant de l'hydrocarbure en gaz de transformation contenant de l'hydrogène, avec un échangeur de chaleur tubulaire (6) au travers duquel circule du gaz combustible (1) contenant de l'hydrocarbure, celui-ci étant préchauffé en mettant à profit la chaleur du gaz de transformation reformé avant d'entrer dans une chambre (7) du catalyseur dans laquelle a lieu la conversion catalytique à la surface d'un catalyseur à plaques et les plaques portant le catalyseur étant réalisées sous forme d'échangeurs de chaleur qui sont traversés par les effluents gazeux de la cathode (3) et par les effluents gazeux d'une chambre de combustion catalytique (8) dans laquelle les résidus d'hydrogène, de dioxyde de carbone et de monoxyde de carbone présents dans le gaz de transformation sont brûlés par combustion catalytique,
**caractérisé ence**
**que** le module de reformage dispose d'une entrée by-pass (10) dans l'échangeur de chaleur tubulaire monté en amont au travers duquel on peut faire circuler du gaz combustible froid contenant de l'hydrocarbure jusque dans la chambre du catalyseur.

2. Module de reformage selon la revendication 1, **caractérisé en ce que** les effluents gazeux des cellules électrochimiques ainsi que les effluents gazeux de la chambre de combustion catalytique (8) sont véhiculés à travers le support (7) du catalyseur construit en forme d'échangeur de chaleur à plaques avec l'assistance d'un ventilateur (4) aspirant les effluents gazeux.

3. Module de reformage selon une ou plusieurs des revendications 1 et 2, **caractérisé en ce que** le module de reformage est rattaché sur une grande surface à la cellule électrochimique pour utiliser la chaleur perdue du processus électrochimique.

4. Module de reformage selon une ou plusieurs des revendications 1 à 3, **caractérisé en ce que** l'échangeur de chaleur tubulaire (6) est un module remplaçable.

5. Module de reformage selon une ou plusieurs des revendications 1 à 4, **caractérisé en ce que** les catalyseurs à plaques (7) construits sous forme d'échangeur de chaleur en forme de plaque sont des modules remplaçables.
